# EUROPEAN PATENT APPLICATION

(11) **EP 1 038 994 A1**
(43) Date of publication of application: **27.09.2000**
(21) Application number: 99943293.3
(22) Date of filing: 13.09.1999
(51) Int. Cl.: C25D 1/04, H01M 4/80

(54) **POROUS COPPER FOIL, USE THEREOF AND METHOD FOR PREPARATION THEREOF**

(30) Priority: 14.09.1998 JP 27938198
(71) Applicant: Mitsui Mining & Smelting Co., Ltd, Tokyo 141-8584 (JP)
(72) Inventor: SUGIMOTO, Akiko Mitsui Mining & Smelting Co., Ltd., Ageo-shi Saitama 362-0021 (JP); OBATA, Shinichi Mitsui Mining & Smelting Co., Ltd., Ageo-shi Saitama 362-0021 (JP); YOSHIOKA, Atsushi Mitsui Mining Smelting Co., Ltd., Ageo-shi Saitama 362-0021 (JP); DOBASHI, Makoto Mitsui Mining & Smelting Co., Ltd., Ageo-shi Saitama 362-0021 (JP); TAKAHASHI, N. Mitsui Mining Sml. Co., Ltd., Ageo-shi Saitama 362-0021 (JP); KATAOKA, Takashi Mitsui Mining & Sml. Co., Ltd., Ageo-shi Saitama 362-0021 (JP); SAKAI, Hisao Mitsui Mining & Smelting C0., Ltd, Ageo-shi Saitama 362-0021 (JP); TAKAHASHI, Masaru Mitsui Mining & Sml. Co., Ltd., Ageo-shi Saitama 362-0021 (JP); BABASAKI, Youichi Mitsui Mining & Smelt. Co., Ltd., Ageo-shi Saitama 362-0013 (JP); MATSUI, Yoshinari Mitsui Mining & Smelt. Co., Ltd., Ageo-shi Saitama 362-0013 (JP); HARA, Yasuji Mitsui Mining & Smelt. Co., Ltd., Ageo-shi Saitama 362-0013 (JP)
(74) Representative: Allard, Susan Joyce
(86) International application number: JP9904967
(87) International publication number: WO0015875

(57) **Abstract**

The present invention relates to porous copper foil, use thereof, and a method for producing the foil, which copper foil being suitable for a collector for a lithium ion secondary battery and having through-pores made in a direction of thickness of the foil. The porous copper foil is formed by means of electroplating such that copper grains having an average plane-wise grain size of 1-50µm are two-dimensionally bonded to one another, and which foil has an optical transmittance of 0.01% or more and a difference in surface roughness between the side contacting a cathode for electroplating and the counter side represented by Rz of 5-20 µm. The method for producing the above-described porous copper foil comprises the step of depositing copper grains through electroplating on a cathode formed of aluminum, aluminum alloy, titanium or titanium alloy to grow copper grains to form the porous copper foil.

## Description

### Technical Field

The present invention relates to porous copper foil, use thereof, and a method for producing the foil.

### Background Art

In recent years, there have been developed a variety of compact electronic apparatus requiring small-size batteries, such as cellular phones and notebook-type personal computers. Such an electronic apparatus employs a lithium ion secondary battery, in consideration of reliability and cost. A lithium ion secondary battery comprises a can serving as a casing and positive and negative electrodes housed therein, wherein the electrodes are wound with a separator disposed therebetween, to form a cylindrical shape. The positive electrode is formed of a paste applied to metal foil such as aluminum foil serving as a collector, the paste being prepared by means of mixing an active substance such as LiCoO₂, LiNiO₂, or LiMn₂O₄ with a conducting agent such as carbon and a binder such as Teflon. The negative electrode is formed of a paste applied to metal foil such as copper foil serving as a collector, the paste being prepared by means of mixing carbon serving as an active substance and a binder such as Teflon.

In order to produce such a lithium ion secondary battery, an electrolyte must sufficiently permeate an active substance. However, the amount of electrolyte which can be incorporated in a battery of a given volume has a specific limit. Therefore, effective permeation, in terms of both speed and depth, of a small amount of an electrolyte to an active substance is important from the viewpoints of cost and performance of the battery to be produced. In addition, a lithium ion secondary battery may exhibit lowering of charge-discharge efficiency due to separation of an active substance from a collector during a charge or discharge process. One possible solution to the above problems in the prior art is use, as a collector of a negative electrode, of copper foil having appropriate surface roughness and through pores that penetrate the thickness of the foil (hereinafter called "through-pores").

Examples of such collectors which have conventionally been known include a collector made of a punched metal sheet containing through-pores of a specific diameter. In order to produce a punched metal sheet, original foil must be subjected to a punching process after production thereof. In addition, chips produced in the course of punching must be disposed of. Thus, punching increases production cost. Japanese Patent Application Laid-Open (*kokai*) No. 8-124575 discloses a collector for an electrode plate of a secondary battery employing a non-aqueous electrolyte. Specifically, zigzag lines are provided in metal foil having a thickness of 40-80 µm, and the cut portions are expanded by means of an expansion process, to thereby form a reticulate structure. The thus-treated foil is further pressed in a secondary process, to thereby yield the above collector. However, since in the collector the ratio of the open area to the overall surface area of the foil is high, a paste must be applied to a relatively large thickness in order that an active substance can be incorporated in a given amount per unit surface area of the electrode plate. Such application may lower correction efficiency and deteriorate performance of the battery to be produced. In addition, mechanical processing produces burrs, which cannot be completely prevented. The generated burrs might break a separator and induce a short-circuit.

Japanese Patent Application Laid-Open (*kokai*) No. 8-213026 discloses a porous metal structure for an electrode substrate of a battery wherein the main frame that surrounds pores has a porous fiber structure or a three-dimensional network structure produced from metal powder or metal fibers. Japanese Patent Application Laid-Open (*kokai*) No. 9-143510 discloses a similar porous metal structure wherein the main frame that surrounds pores is formed of entangled metal fibers, and the fibers are directly melt-bonded. However, a process for producing such porous metal structures requires cumbersome steps; i.e., rendering metal fibers to entangle through high-pressure water flow, followed by melt-bonding the metal fibers. Thus, such a process increases production cost.

Japanese Patent Application Laid-Open (*kokai*) No. 9-153364 discloses a battery electrode, which is produced by the steps of imparting electrical conductivity to a skeleton of sponge-like foamed resin having a three-dimensional network structure; plating; and removing the foamed resin through sintering. However, such a production process includes a cumbersome step; i.e., removal of resin after plating on a foamed resin sheet.

Japanese Patent Application Laid-Open (*kokai*) No. 8-236120 discloses electrolytically-produced porous metal foil having a three-dimensional network structure containing through-pores, the foil being produced by the steps of electroplating by use of a drum cathode and an anode to thereby form a metal foil layer on the drum cathode; and peeling the foil layer from the cathode. The drum cathode, which has been cleared by peeling the foil formed thereon, is coated with an oxide film having a thickness of at least 14 nm. The ratio of the opening area of the metal foil to the overall surface area depends on the thickness of the oxide film. Since the oxide film is gradually peeled off as the metal foil is peeled off, control of the opening area ratio and the opening size becomes difficult. Further, the relatively small opening size and the three-dimensional network structure make it difficult to make a direct contact the paste to be applied to both the front and back sides of the foil directly, and therefore it would be limited to improve adhesion properties between the paste and collector.

Thus, production steps for conventional porous copper foil are cumbersome, and conventional copper foil has insufficient performance when used as a collector of a lithium ion secondary battery. Therefore, there is demand for a porous copper foil having more excellent performance.

In view of the foregoing, an object of the present invention is to provide copper foil having appropriate surface roughness and optically-transmittable through-pores made in a direction of thickness of the foil and which is useful as a collector for a lithium ion secondary battery. Another object of the invention is to provide use of the foil. Still another object of the invention is to provide a method for producing the foil.

### Disclosure of the Invention

Accordingly, the present invention provides porous copper foil which is formed through electroplating such that copper grains having an average grain size with respect to a direction perpendicular to the thickness of the foil (hereinafter called "plane-wise grain size") of 1-50 µm are two-dimensionally bonded to one another; which foil has an optical transmittance of 0.01% or more and a difference in surface roughness between the side contacting a cathode for electroplating and the counter side represented by Rz of 5-20 µm.

Preferably, the porous copper foil has a thickness 1-5 times the average grain size as measured in the thickness direction; specifically, a thickness of 3-40 µm. The porous copper foil is applicable to a battery; e.g., a negative electrode of a secondary battery.

The present invention also provides a complex metal foil which comprises an aluminum layer and the above-described porous copper foil layer, wherein the aluminum layer is formed of aluminum or aluminum alloy and has a thickness of 3-50 µm.

The present invention further provides a method for producing the above-described porous copper foil, which comprises the step of depositing copper grains through electroplating on a cathode formed of aluminum, aluminum alloy, titanium, or titanium alloy.

Specifically, the method comprises the steps of depositing copper grains through electroplating on a drum cathode whose surface is formed of aluminum, aluminum alloy, titanium, or titanium alloy, to thereby form the above-described porous copper foil; and peeling the copper foil from the drum cathode. Alternatively, the method comprises the steps of depositing copper grains through electroplating on a belt cathode whose surface is formed of aluminum, aluminum alloy, titanium, or titanium alloy, to thereby form the above-described porous copper foil; and peeling the copper foil from the belt cathode.

Preferably, in the method for producing a porous copper foil according to the present invention, the above-described cathode whose surface is formed of aluminum or aluminum alloy is subjected to any one of the following surface treatment processes:
(a) the surface of the cathode is partially coated with fat or oil;
(b) the surface of the cathode is partially plated in a copper pyrophosphate bath; and
(c) the surface of the cathode is partially coated with oxide film.

Preferably, when the surface of the above-described cathode is formed of titanium or titanium alloy, the surface is partially coated with oxide film. More preferably, the oxide film has a thickness less than 14 nm and is formed through anodization.

The present invention also provides a method for producing the above-described complex metal foil, which comprises the step of depositing copper grains by means of electroplating on a tape substrate formed of aluminum or aluminum alloy.

In the above-described complex metal foil, the aluminum layer and the porous copper layer are separated from each other. The separated aluminum foil may be used as a collector of a positive electrode of a secondary battery, while the separated porous copper foil may be used as a collector of a negative electrode of the secondary battery.

Preferably, in the method for producing a complex metal foil according to the present invention, the tape substrate formed of aluminum or aluminum alloy is subjected to any one of the following surface treatment processes:
(a) the surface of the cathode is partially coated with fat or oil;
(b) the surface of the cathode is partially plated in a copper pyrophosphate bath; and
(c) the surface of the cathode is partially coated with oxide film.

### Brief Description of the Drawings

Fig. 1 is a cross-sectional view of the porous copper foil of the present invention.
Fig. 2 is a schematic view of one example of an apparatus producing the porous copper foil of the present invention.
Fig. 3 is a schematic view of another example of an apparatus producing the porous copper foil of the present invention.
Fig. 4 is a schematic view of one example of an apparatus producing the complex metal foil of the present invention.
Fig. 5 is electron microscopic photographs showing the surface structure of the porous copper foil produced in Example 1 ((A) Sample No. 1, (B) Sample No. 2).
Fig. 6 is electron microscopic photographs showing the surface structure of the porous copper foil produced in Example 2 ((A) Sample No. 3, (B) Sample No. 4).
Fig. 7 is electron microscopic photographs showing the surface structure of the porous copper foil produced in Example 2 ((A) Sample No. 5, (B) Sample No. 6).
Fig. 8 is electron microscopic photographs showing the surface structure of the porous copper foil produced in Example 2 ((A) Sample No. 7, (B) Sample No. 8).
Fig. 9 is electron microscopic photographs showing the surface structure of the porous copper foil produced in Comparative Example 1 ((A) Sample No. 9, (B) Sample No. 10).
Fig. 10 is an electron microscopic photograph showing the surface structure of the porous copper foil produced in Reference Example 1 (Sample No. 11).
Fig. 11 is a chart showing X-ray diffraction patterns of the M surface of the samples of porous copper foil produced in Example 2.
Fig. 12 is a microscopic photograph showing a cross-section of the porous copper foil produced in Example 2.
Fig. 13 is electron microscopic photographs showing the M surface and S surface of the porous copper foil produced in Example 2.
Fig. 14 is an electron microscopic photograph showing the surface structure of the copper foil produced in Comparative Example 1 (Sample No. 12).
Fig. 15 is a chart showing an X-ray diffraction pattern of the M surface of the copper foil produced in Comparative Example 1 (Sample No. 12).
Fig. 16 is a graph showing the relationship between the optical transmittance of copper foil and the anodization voltage of a cathode formed of titanium that has been buffed with a buffer (#280).
Fig. 17 is a graph showing the relationship between the optical transmittance of copper foil and the anodization voltage of a cathode formed of titanium that has been buffed with a buffer (#600).

### Best Mode for Carrying Out the Invention

The porous copper foil, use thereof, and the method for producing the foil according to the present invention will next be described in detail.

The porous copper foil according to the present invention is formed by means of electroplating such that copper grains having an average plane-wise grain size of 1-50 µm, preferably 5-30 µm, more preferably 10-25 µm, are two-dimensionally bonded to one another. The porous copper foil contains a number of through-pores made in a direction of the thickness thereof so that light is transmittable. The porous copper foil typically has a pore sizes of 1-20 µm and a pore distribution density of 1-500/mm².

When the average plane-wise grain size is less than 1 µm, formation of appropriate through-pores in the copper foil is difficult, whereas when the size is in excess of 50 µm, through-pores having a pore size of greater than 20 µm are apt to be formed. When the average plane-wise grain size is 5-30, preferably 10-25 µm, the porous state of the foil makes the foil suitable for use as a collector for a lithium ion secondary battery, and properties of the copper foil such as surface roughness, tensile strength, and elongation are also excellent.

The porous copper foil has an optical transmittance of 0.01% or more, preferably 0.1-30%, more preferably 1-30%. When the transmittance is less than 0.01%, the foil is equivalent to one in which substantially no through-pores are formed, whereas when the transmittance is in excess of 30%, the produced porous copper foil has completely degenerated tensile strength and poor characteristics for practical use.

The optical transmittance of the foil is measured according to the following methods. In a first method, transmittance is measured by use of Hitachi Spectrophotometer U-4000 at a measurement wavelength of 530 nm and a slit width of 8 nm (hereinafter the method is referred to as "a method for measuring optical transmittance (a)"). In a second method, a porous copper foil is irradiated with an He-Ne laser beam, and the transmitted laser beam is received by a power meter. The transmittance is calculated by use of measured light intensity (hereinafter this method is referred to as "a method for measuring optical transmittance (b)").

The porous copper foil of the present invention is formed of clusters, serving as units, of copper grains having an average plane grain size of 1-50 µm and which are two-dimensionally bonded to one another. In other words, formation of the above-mentioned copper foil is achieved by restraining nucleation rate in deposition at an initial stage of an electrolysis, to thereby set conditions where grains grow preferentially relative to nucleation. The copper grains grow remarkably to present an island-like configuration, and consequently contact with neighboring copper grains to form a continuous foil. However, parts where copper grains fail to contact to one another will remain as pores. Thus, the porous copper foil allows optical transmittance because of the gaps present among the copper grains and through-pores formed by the gaps in a direction of the thickness of the foil. Thus, the porous copper foil of the present invention has an optical transmittance of 0.01% or more provided y the through-pores.

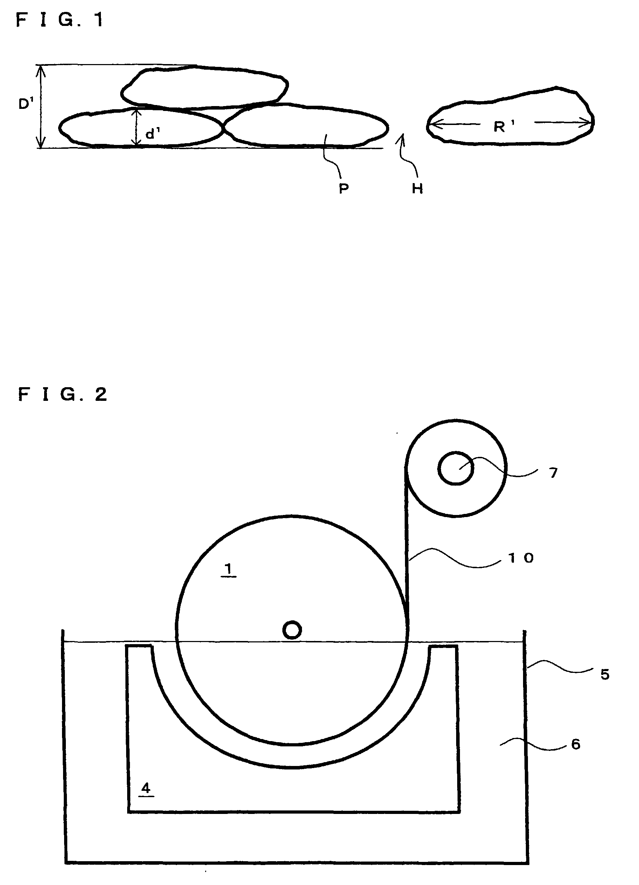

Fig. 1 is a schematic cross-sectional view of the porous copper foil of the present invention. The foil has a thickness (D) of 3-40 µm, preferably 5-20 µm. When the thickness is less than 3 µm, production of the foil *per se* is difficult, and handling of the foil is difficult, whereas when the thickness is more than 40 µm, copper grains are grown excessively, to thereby make formation of through-pores made in a direction of the thickness thereof so that light is transmittable difficult.

The porous copper foil (D) has a thickness 1.0-5.0 times, preferably 1.0-3.0 times, the average grain size of copper grains with respect to the thickness direction (d) (hereinafter called "thickness-wise grain size"). When the thickness is more than 5.0 times the average thickness-wise grain size, formation of through-pores is difficult due to multi-layer stacking of copper grains or excessive growth of the copper grains.

The M surface of the porous copper foil typically has a roughness (Rz) of 5-10 µm and the S surface of the porous copper foil typically has a roughness (Rz) of 1-5 µm. The difference between surface roughness of the M surface and that of the S surface is typically 5-20 µm, preferably 5-10 µm. The S surface refers to a surface from which electroplating proceeds; i.e., the surface contacting a cathode, whereas the M surface refers to a counter surface to the S surface. In general, roughness of the M surface greatly depends on that of the S surface; i.e., the roughness of the surface of the cathode and the thickness of the copper foil. Thus, roughness of the S surface and that of the M surface are controlled to a certain degree through control of the surface roughness of the cathode. When the difference between the surface roughness of the M surface and that of the S surface is 5-20 µm (Rz), the porous copper foil exhibits excellent adhesion to an active substance during use as a collector of a secondary battery.

The average plane-wise grain size and the average thickness-wise grain size will next be described. The average plane-wise grain size is defined as an average value of the plane-wise grain size (R1) of copper grains as shown in Fig. 1, while the average thickness-wise grain size is defined as an average value of the thickness-wise grain size (d1) of copper grains, the copper grains forming the porous copper foil. The thickness (D) is an average thickness of the foil other than the pore portions. In Fig. 1, P represents a copper grain and H represents a through-pore made in a direction of the thickness of the copper foil so that light is transmittable.

The copper grains forming the porous copper foil of the present invention have almost random orientation. The intensity of X-ray diffraction peaks measured for the M surface is characterized by the relationship: (111) > (200) > (220). The relationship of the intensity of X-ray diffraction peaks represents that the copper grains forming the foil are randomly oriented. Typical copper foil satisfies the following relationship in X-ray diffraction peak intensity: (220) > (111) > (200). Herein, (111) and like notations represent Miller indices.

Such porous copper foil can be used for a battery; e.g., a collector of a negative electrode of a secondary battery. When the porous copper foil of the present invention is employed as a collector of a lithium ion secondary battery, an electrolyte flows easily; a limited amount of electrolyte can uniformly permeate the active substance; and transfer of lithium ions and electrons is not disturbed during charge and discharge processes, due to provision of a number of through-pores. The porous copper foil also has appropriate surface roughness, to thereby provide excellent adhesion to an active substance.

In addition, in the porous copper foil of the present invention, problems such as generation of burrs and large-scale reduction of the area incorporating an active substance are prevented, and almost the entire surface area of the foil can incorporate an active substance.

Moreover, the porous copper foil of the present invention has a pore size larger than that of the three-dimensional sponge-like foil disclosed in Japanese Patent Application Laid-Open (*kokai*) No. 9-153364 or that of electrolytically-produced porous metal foil having a three-dimensional network structure disclosed in Japanese Patent Application Laid-Open (*kokai*) No. 8-236120. Thus, a paste applied to one side of the foil and a paste applied to the other side of the foil can be brought into direct contact with each other, to thereby enhance adhesion between the paste and a collector.

A complex metal foil of the present invention comprises the above-described copper foil and an aluminum layer which is formed of aluminum or aluminum alloy and has a thickness of 3-50 µm, preferably 5-20 µm.

The complex metal foil of the present invention provides a porous copper foil by peeling the copper foil from the complex metal foil, or by dissolving the aluminum or aluminum alloy layer of the complex metal foil. The thus-obtained porous cooper foil can be used for a battery; e.g., a collector of a negative electrode of a secondary battery, and the thus-separated aluminum or aluminum alloy foil can also be used for a battery; e.g., a collector of a positive electrode of a secondary battery. When the thickness of the aluminum layer in the complex metal foil is less than 3µm, difficulty will be entailed in manufacturing and handlability will become poor. On the other hand, an aluminum layer having a thickness of more than 50µm is not preferable from a cost standpoint.

The porous copper foil is produced by the steps of depositing copper grains through electroplating on a cathode formed of aluminum, aluminum alloy, titanium, or titanium alloy, preferably on a drum cathode whose surface is formed of aluminum, aluminum alloy, titanium, or titanium alloy; and peeling the formed copper foil from the cathode.

The complex metal foil can be produced by the step of depositing copper grains, by means of electroplating, on a cathode which is formed of aluminum foil or aluminum alloy foil.

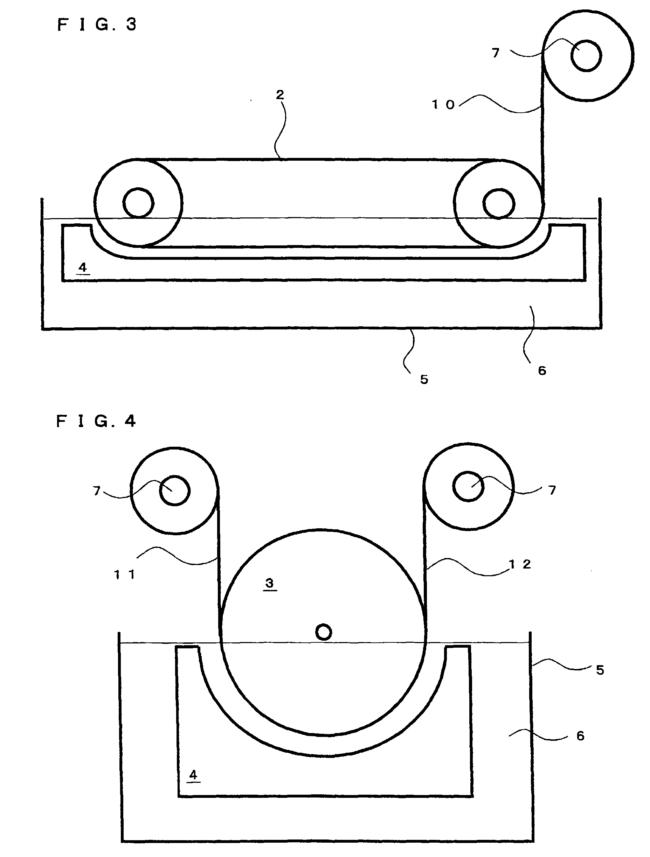

Examples of a method for producing the porous copper foil and that for producing the complex metal foil will next be described with reference to Figures. Each of Fig. 2 and 3 is a schematic view showing an apparatus which can produce the porous copper foil of the present invention. Fig. 4 is a schematic view showing an apparatus which can produce the complex metal foil of the present invention.

In Fig. 2, which shows an apparatus producing porous copper foil, a drum cathode 1 is disposed such that a portion thereof is dipped in an electrolyte 6 contained in an electroplating bath 5. An anode 4 is disposed such that the anode is dipped in the electrolyte 6 and opposes to the cathode 1. During production of porous copper foil, the drum cathode 1 is rotated to thereby successively pass the surface in the electrolyte 6, while voltage is applied to the anode 4 and the drum cathode 1, to thereby effect electroplating. Copper ions are electrochemically reduced to form copper grains on the surface of the drum cathode 1, and the formed copper grains are bonded to one another, to thereby continuously produce porous copper foil along the direction of rotation. The thus-formed porous copper foil 10 is pulled from the electrolyte 6, peeled from the surface of the cathode 1, and finally wound by a roll 7.

In Fig. 3, which shows an apparatus producing porous copper foil, a belt cathode 2 is disposed such that a portion of the cathode 2 is dipped in an electrolyte 6 contained in an electroplating bath 5. An anode 4 is disposed such that the anode is dipped in the electrolyte 6 and opposes to the cathode 2. During production of porous copper foil, the belt cathode 2 is continuously passed in the electrolyte 6, while voltage is applied to the anode 4 and the belt cathode 2, to thereby effect electroplating. Copper ions are electrochemically reduced to form copper grains on the surface of the belt cathode 2, and the formed copper grains are bonded to one another, to thereby continuously produce porous copper foil along the direction of transport of the cathode 2. The thus-formed porous copper foil 10 is pulled from the electrolyte, peeled from the surface of the cathode 2, and finally wound by a roll 7.

In Fig. 4, which shows an apparatus producing complex metal foil, a drum cathode 3 is disposed such that a portion of the cathode 3 is dipped in an electrolyte 6 contained in an electroplating bath 5. An anode 4 is disposed such that the anode is partially dipped in the electrolyte 6 and opposes to the cathode 3. A tape substrate 11 formed of aluminum or aluminum alloy is wound by the cathode 3 such that a portion of the substrate 11 is dipped in the electrolyte 6. During production of complex metal foil; i.e., porous copper foil laminated with an aluminum layer, the tape substrate is continuously passed in the electrolyte 6, while voltage is applied to the anode 4 and the cathode 3, to thereby effect electroplating. Copper ions are electrochemically reduced to form copper grains on the surface of the tape substrate 11, and the formed copper grains are bonded to one another, to thereby continuously produce porous copper foil on the surface of the tape substrate 11 along the direction of transport of the substrate 11. The thus-formed complex metal foil 12 is wound by a roll 7.

The electrolyte used in these methods typically contains CuSO₄ in an amount of 50-400 g/l, preferably 200-300 g/l, and H₂SO₄ in an amount of 50-300 g/l, preferably 100-200 g/l. The current density is typically 5-80 A/dm², preferably 10-30 A/dm². The temperature of the electrolyte is typically 20-60°C, preferably 30-50°C.

Furthermore, additives such as glue and chlorine (Cl) may be incorporated into the electrolyte, to thereby control the surface morphology. Such additives are typically incorporated at a concentration of 1-300ppm.

Examples of the material forming the above-described drum or belt cathode include aluminum, aluminum alloy, titanium, and an titanium alloy. In the present invention, the surface of the drum or belt cathode where copper foil deposits is preferably treated in advance.

When the drum or belt cathode is formed of aluminum or aluminum alloy, or the tape substrate formed of aluminum or aluminum alloy is used during production of complex metal foil, the following surface treatment processes (a) to (c), for example, may be carried out.

In surface treatment process (a), the surface of the cathode is partially coated with fat or oil. Examples of such fat or oil include fatty acid derivatives such as fatty acids, fatty acid salts, and fatty acid esters. These are typically applied to the cathode surface at a coating rate of 10⁻³ -10 g/m².

In surface treatment process (b), the surface of the cathode is partially plated in a copper pyrophosphate bath. The bath comprises 40-100 g/l of copper pyrophosphate and 100-400 g/l of potassium pyrophosphate and has a pH of 7-9. The plating is typically performed at a current density of 1-6 A/dm² for 5-60 seconds.

In surface treatment process (c), the surface of the cathode is partially coated with oxide film. Examples of the method include anodization of the cathode in an acidic solution. Examples of the components of the solution include boric acid, ammonium tartrate, sulfuric acid, phosphoric acid, and chromic acid. In this case, anodization is typically carried out at a current density of 1-5 A/dm² for 1-10 minutes.

Prior to surface treatment process (b) or (c), the cathode may be decreased in surface area. In the methods for producing porous copper foil by use of an apparatus shown in Fig. 2 or 3, the surface condition of the cathode is not easily changed. Therefore, control of the obtained porous copper foil is easy.

When the drum or belt cathode is formed of titanium or titanium alloy, the surface may be partially coated with oxide film. Examples of the coating method include anodization of the cathode in an acidic solution. Examples of the components of the solution include sulfuric acid, boric acid, ammonium tartrate, phosphoric acid, and chromic acid. In this case, anodization is typically carried out at a voltage of 0.01 to less than 10V for typically 5 to 30 seconds.

When oxide film is formed by anodization, the formed oxide film preferably has a thickness of less than 14nm, for example when an optical transmittance is assumed 10% or more (according to the method for measuring optical transmittance (b)), it is more preferable to form oxide film having a thickness of 2.8-12.6nm. When oxide film having a thickness of 14nm or more is formed on the cathode formed of titanium or titanium alloy, through-pores are not formed in the copper foil.

In order to produce the porous copper foil of the present invention by use of the drum or belt cathode formed of titanium or titanium alloy, oxide film may be formed on the cathode by means a customary anodization method.

Description is made with reference to the drum cathode as shown in Fig. 2 for example, where oxide film is continuously formed on a portion of the cathode that is not dipped in the electrolyte 6. Specifically, in the case of the cathode 1 which rotates during a manufacturing process, oxide film is formed on a portion of the cathode 1 which portion is not yet dipped in the electrolyte 6. Oxide film once formed on a portion of the cathode 1 is apt to reduce its own thickness by peel of the porous copper foil or by dissolution by the electrolyte. However, if application of voltage for compensating the reduced amount is normally carried out, the oxide film can be maintained to have a predetermined thickness, thereby to allow continuous manufacturing of the porous copper film according to the present invention.

### Examples

The present invention will next be described in detail by way of examples, which should not construed as limiting the invention thereto.

### Example 1

Copper was electroplated on aluminum foil serving as an electrode under the conditions shown in Table 1. The aluminum foil was degreased by means of dipping in a bath containing NaOH (30 g/l), Rochelle salt (46 g/l), and Na₂CO₃ (46 g/l) for 30 seconds.

Electroplating was carried out in a copper pyrophosphate bath comprising 56 g/l of copper pyrophosphate and 290 g/l of potassium pyrophosphate and having a pH of 7.4, at a current density of 1 A/dm² for 30 seconds.

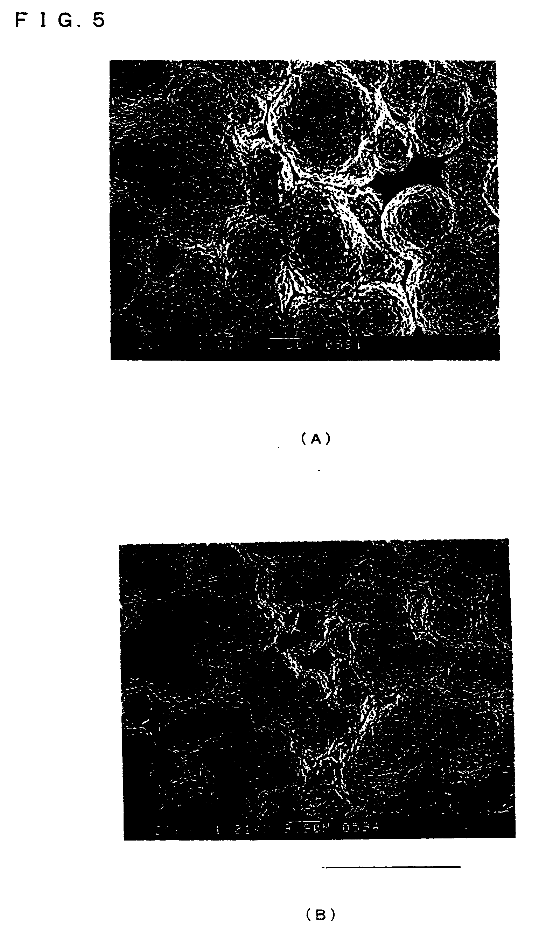

Fig. 5 is an electron microscopic photograph showing the surface structure of the obtained porous copper foil. The copper foil obtained as shown in Fig. 5 is a porous copper foil which is formed through bonding copper grains to one another in a state where the foil has optically-transmittable through-pores made oin a direction of thickness thereof.

**[Table 1]**

| Sample No. | Degreasing of Al foil | Cu pyrophosphate plating | Transmittance (%) | Av. plane-wise grain size (µm) | Foil thickness (µm) | Av. thicknesswise grain size (µm) |
|---|---|---|---|---|---|---|
| 1 | no | no | 0.29 | 21 | 19 | 16 |
| 2 | yes | yes | 0.31 | 19 | 19 | 16 |

### Example 2

Copper was electroplated on anodized aluminum foil serving as an electrode, under the conditions shown in Table 2 (Sample Nos. 3-8). Aluminum was anodized in a bath containing 150 ml/l of H₂SO₄, at room temperature and a current density of 1 A/dm². Electroplating was carried out after washing of the anodized aluminum foil. The oxide film on the surface of the aluminum foil in the case is assumed to have a thickness of approximately 5.6nm because the voltage during anodization was about 4V. The thickness of the oxide film as shown here was calculated based on figures generally given as 1.4nm/V in a relation between oxide film and voltage of anodization in anodization of aluminum (The source: Association of Light Metals; A handbook of Aluminum Technologies; Caros Shuppan, 1996).

### Example 3

Copper was electroplated on anodized aluminum foil serving as an electrode, under the conditions shown in Table 2 (Sample Nos. 9-11).

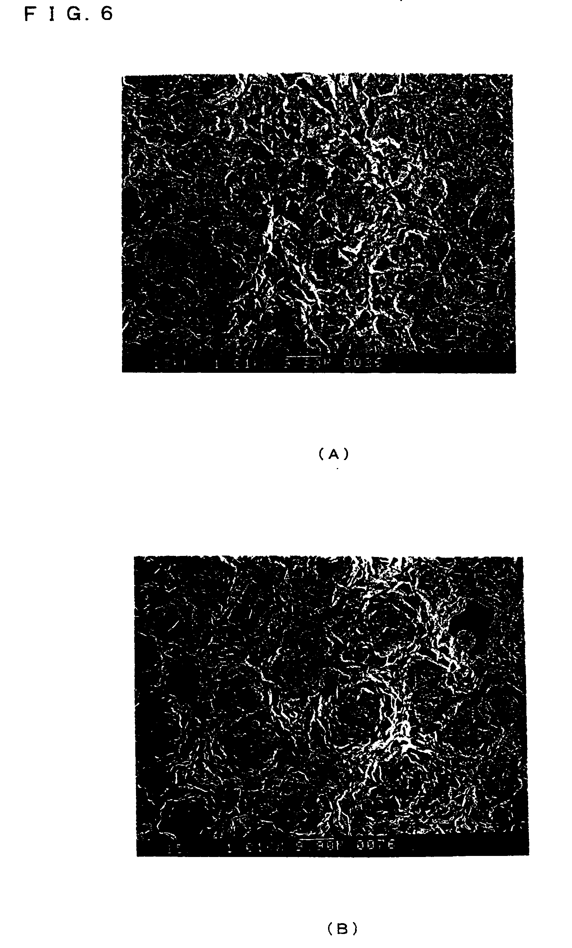

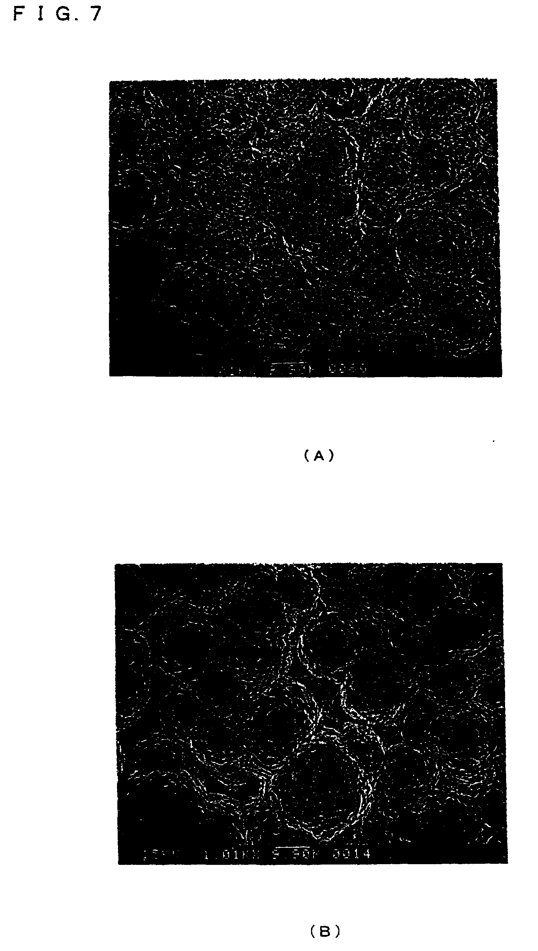

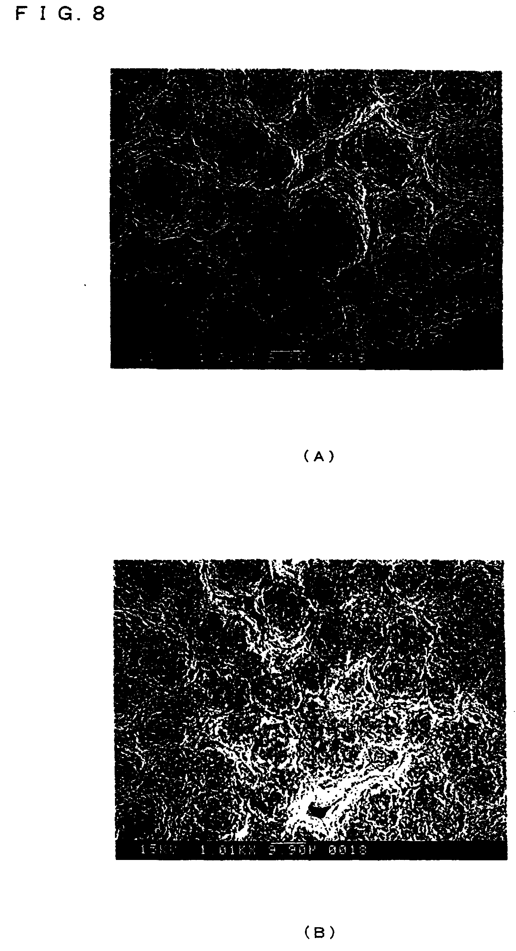

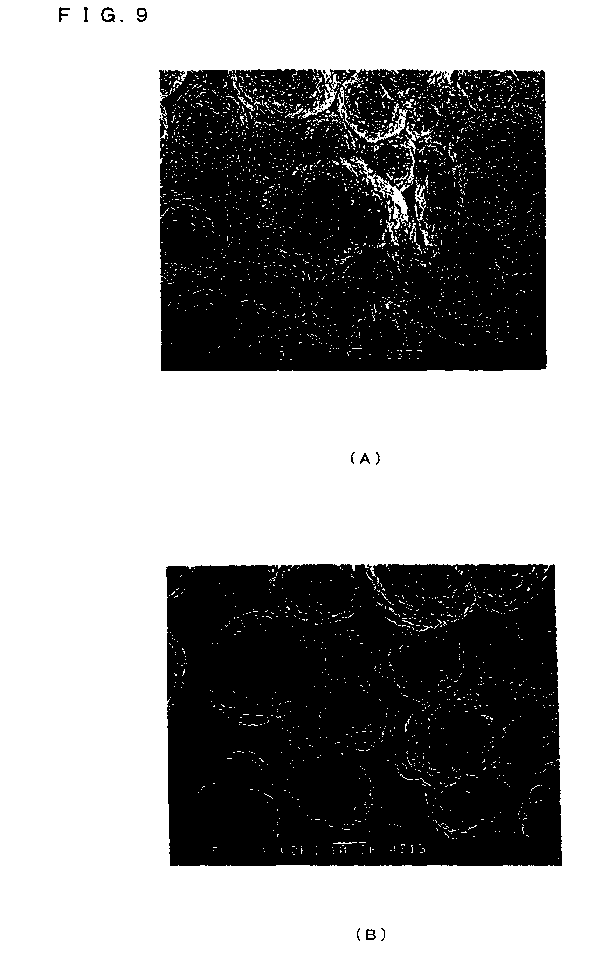

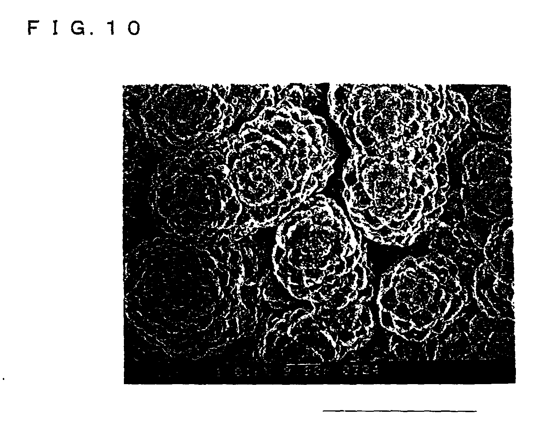

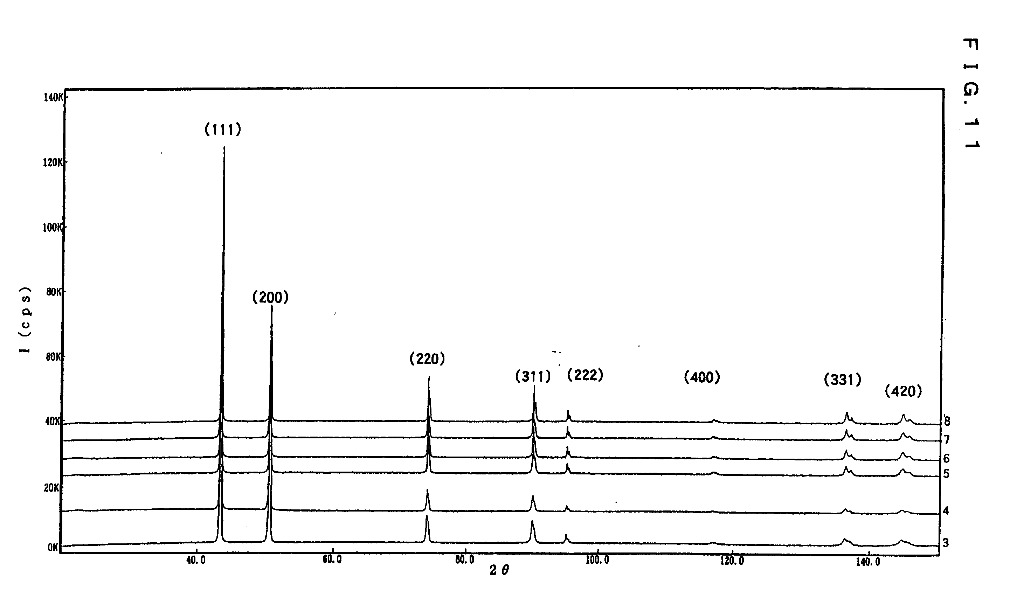

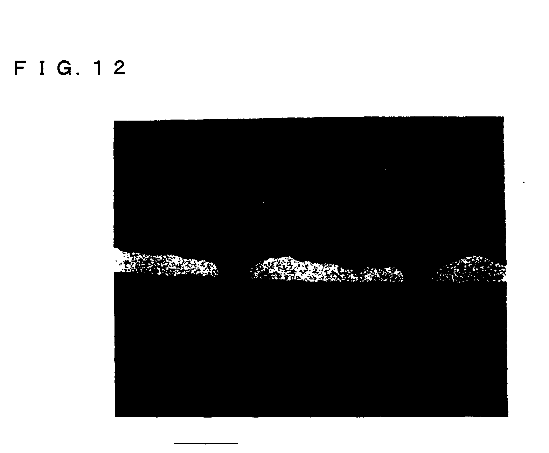

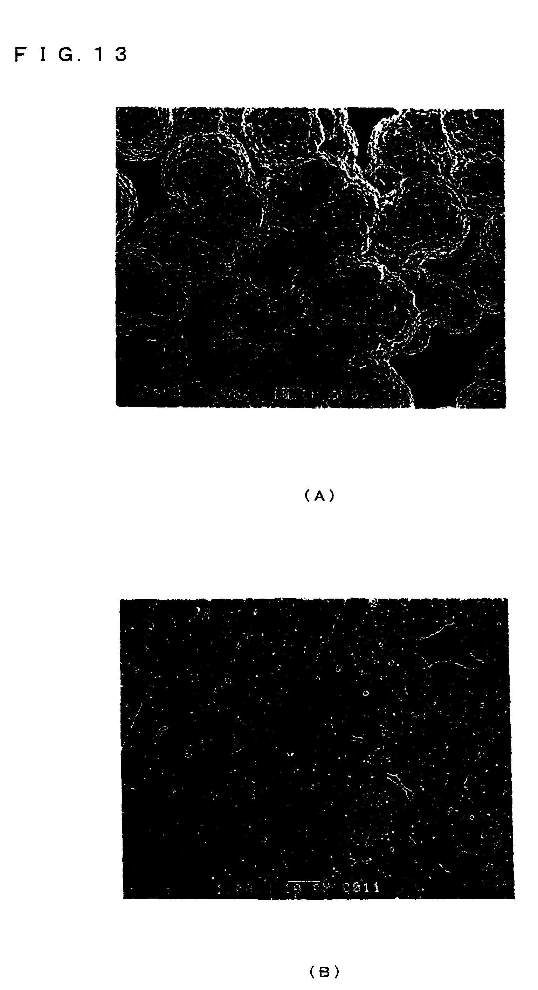

Figs. 6 to 8 are electron microscopic photographs showing the surface structure of samples of porous copper foil obtained in Example 2, and Figs. 9 and 10 are electron microscopic photographs showing the surface structure of porous copper foil obtained in Example 3. Fig. 11 shows X-ray diffraction patterns of the M surface obtained in Example 2. Fig. 12 is a microscopic photograph showing a cross-sectional view of the porous copper foil. The copper foil obtained as shown in Figs. 6 to 10 and Fig. 12 is a porous copper foil formed through bonding the copper grains to one another in a state where the copper foil has through-pores made in a direction of thickness of the foil to allow optical transmittance. Fig. 11 indicates that the copper grains are in an almost randomly oriented state. Further, Fig. 13 shows electron microscopic photographs of the M surface and S surface of the porous copper foil.

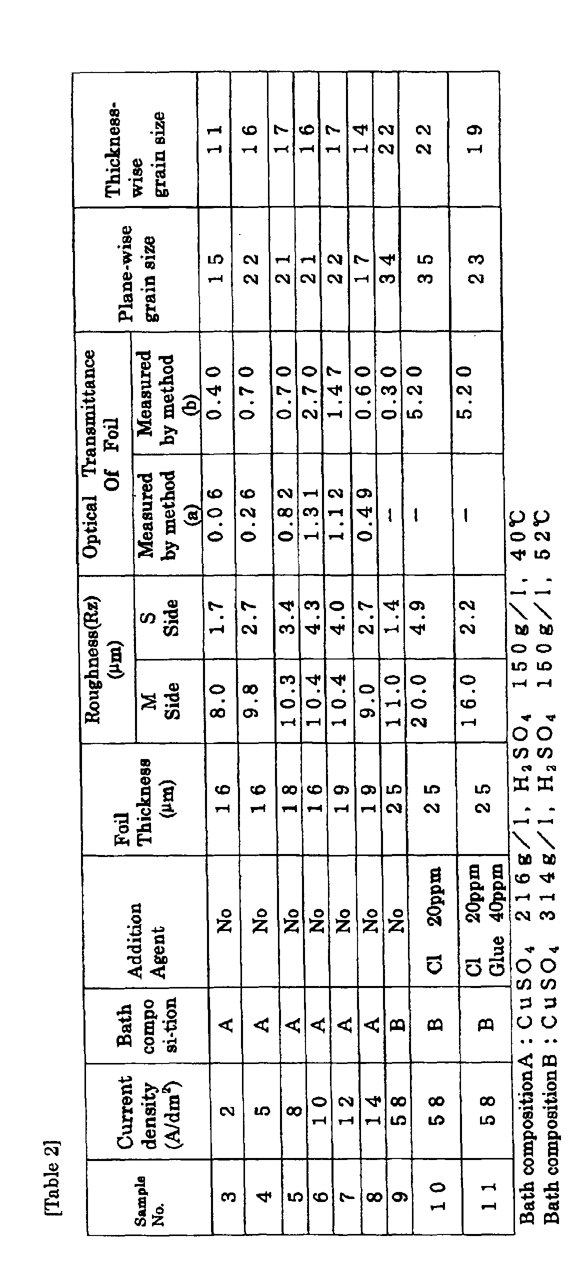

### Comparative Example 1

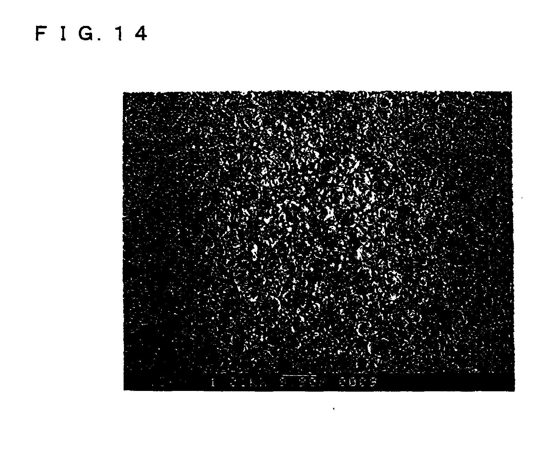

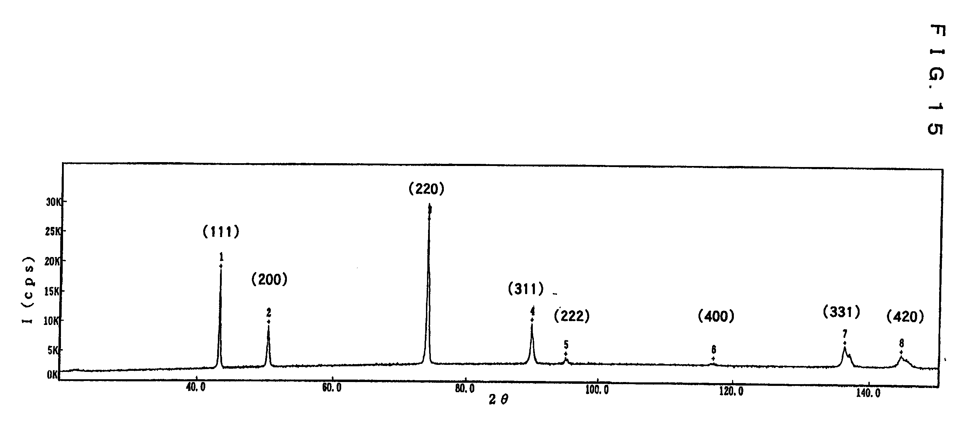

Copper was electroplated on an anodized titanium plate serving as an electrode, under the conditions shown in Table 3. Fig. 14 provides an electron microscopic photograph showing the surface structure of the obtained porous copper foil, and Fig. 15 shows an X-ray diffraction pattern of the M surface. As shown in Fig. 14, the copper foil obtained in Comparative Example 1 is formed of copper grains bonding to one another such that the foil does not have through-pores made in a direction of thickness thereof to allow optical transmittance. In addition, Fig. 15 indicates that the copper foil shows a (220) orientation.

**[Table 3]**

| | Anodization | | Cu electroplating | | | |
|---|---|---|---|---|---|---|
| | Bath composition | Temp. (°C) [Voltage (V)] | Bath composition | Temp. (°C) [Current density (A/dm²)] | Foil thickness (µm) | Transmittance (%) |
| 1 | H₂SO₄ 150 g/l | 40°C | H₂SO₄ 150 g/l | 40°C | 22 | 0 |
| | CuSO₄ 216 g/l | [30 V] | CuSO₄ 216 g/l | [58 A/dm²] | | |
| 2 | H₂SO₄ 250 g/l | room temp. | H₂SO₄ 150 g/l | 60°C | 14 | 0 |
| | | [50 V] | CuSO₄ 216 g/l | [60 A/dm²] | | |

### Example 4

Copper was electroplated on a plate made of titanium and serving as an electrode, under the conditions shown in Table 4. Anodization of the cathode was carried out in the same electrolyte as shown in Table 4, by use of a SUS plate serving as a counter electrode for anodization. The oxidation voltage was 5V and the voltrage was maintained for about 30 seconds to form oxide film, and then electroplating of copper was carried out.

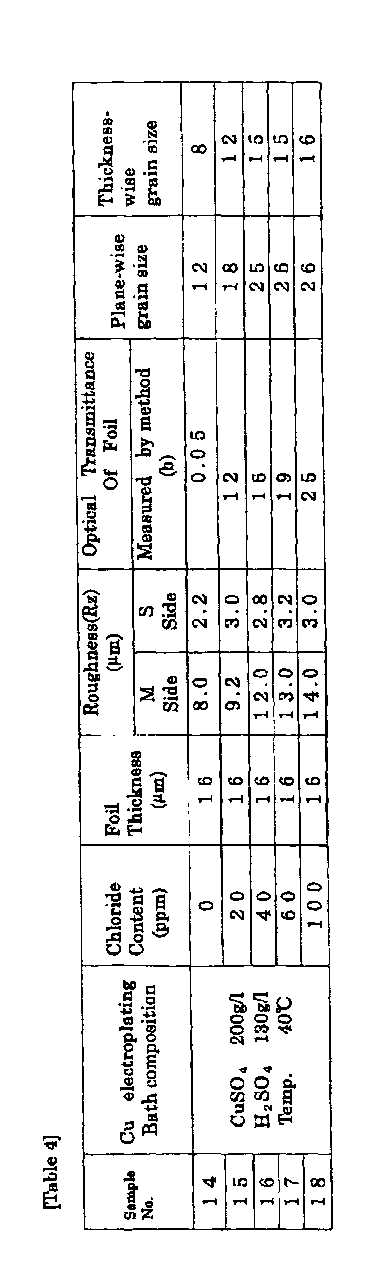

As shown in Table 4, when copper was electroplated on an anodized titanium drum, there were obtained samples of porous copper foil in which copper grains are bonded to one another, such that the foil has through-pores made in a direction of thickness of the foil to allow optical transmittance. The surface structure of the porous copper foil as obtained in Example 4 was similar to that shown in the microscopic photographs of Example 2. As a result of inspection of the porous copper foil as obtained in Example 4 for its X-ray diffraction pattern profile, it was found the diffraction pattern was similar to that shown in Fig. 11. The fact indicates that the copper grains in Example 4 are also in an almost randomly oriented state.

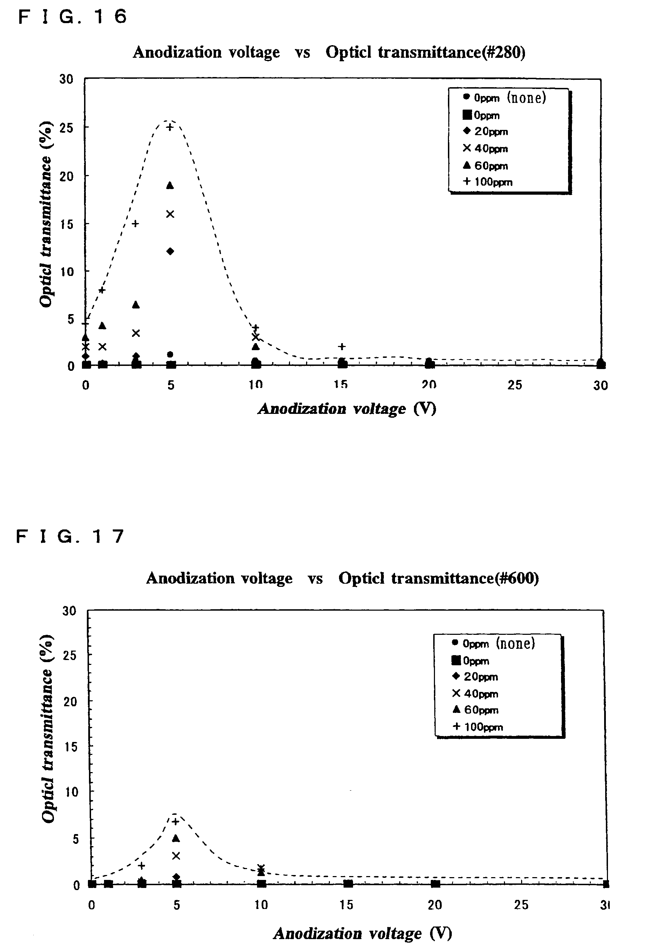

The relationship between the anodization voltage at which oxide film is formed on the titanium drum and the optical transmittance of the produced porous copper foil will next be described. Figs. 16 and 17 are graphs obtained through measuring optical transmittance of porous copper foils obtained by manufacturing process in which oxide film was formed at each anodization voltage for provididng porous copper foil having a targeted weight thickness of 14µm. When the titanium drum was buffed with a buffer (#280), the surface roughness of the drum was about 2-2.5 µm (Rz). Fig. 16 shows the above relationship in the case in which the thus-buffed plate was used. When the titanium plate was buffed with a buffer (#600), the surface roughness of the drum was about 1.2-1.5 µm (Rz). Fig. 17 shows the above relationship in the case in which the thus-buffed plate was used. Electrolytes for anodization having compositions similar to that of copper electrolyte in Sample No. 4 shown in Table 4 and containing 0ppm of chloride content were employed as electrolytes for forming oxide film. The optical transmittance of the porous copper foil was measured through method (b).

As is apparent from Figs. 16 and 17, when the anodization voltage was about 5 V, the optical transmittance of porous copper foil tended to be high. In addition, an increase of the chloride content in the electrolyte was confirmed to cause an increase in optical transmittance. When the anodization voltage was higher than 10 V, few, if any, through-pores made in a direction of thickness of the foil for optical transmittance were formed. This phenomenon reflected the fact that pores that failed to penetrate the thickness of the foil for allowing optical transmittance were produced under the anodization conditions shown in Table 3 of Comparative Example 1.

In general, when a titanium cathode is anodized, an oxide film having a thickness of about 1.4nm is formed at an anodization voltage of about 1 V. In consideration of this known fact and results obtained from Figs. 16 and 17, it was found that anodization at any voltage ranging from about 2-9V and oxide film having a thickness of about 2.4-12.6nm could provide a porous copper foil having optical transmittance of 10% or more. When porous copper foil is produced under such conditions, the produced foil has through-pores suitable for a collector of a secondary battery.

### Industrial Applicability

Since the porous copper foil of the present invention has appropriate surface roughness and through-pores made in a direction of the thickness thereof so that light is transmittable, the foil is suitably used for a battery, e.g., a collector of a lithium ion secondary battery.

## Claims

1. Porous copper foil which is formed through electroplating such that copper grains having an average grain size with respect to a direction perpendicular to the thickness of the foil of 1-50 µm are two-dimensionally bonded to one another; which foil has an optical transmittance of 0.01% or more and a difference in surface roughness between the side contacting a cathode for electroplating and the counter side represented by Rz of 5-20 µm.

2. The porous copper foil according to claim 1, wherein the thickness of the foil is 1-5 times the average grain size as measured in the thickness direction.

3. The porous copper foil according to claim 1 or 2, wherein the thickness of the foil is 3-40 µm.

4. The porous copper foil according to any one of claims 1 through 3, wherein the foil is applicable to a battery.

5. The porous copper foil according to any one of claims 1 through 3, wherein the foil is applicable to a negative electrode of a secondary battery.

6. A complex metal foil which comprises an aluminum layer and a layer of copper foil as recited in any one of claims 1 through 3, wherein the aluminum layer is formed of aluminum or aluminum alloy and has a thickness of 3-50 µm.

7. A method for producing a porous copper foil, which comprises the steps of depositing copper grains through electroplating on the surface of a cathode formed of aluminum, aluminum alloy, titanium, or titanium alloy, to thereby form a porous copper foil as recited in any one of claims 1 through 3, and peeling the copper foil from the cathode.

8. A method for producing a porous copper foil, which comprises the steps of depositing copper grains through electroplating on the surface of a drum cathode, the surface being formed of aluminum, aluminum alloy, titanium, or titanium alloy, to thereby form a porous copper foil as recited in any one of claims 1 through 3, and peeling the copper foil from the drum cathode.

9. A method for producing a porous copper foil, which comprises the steps of depositing copper grains through electroplating on the surface of a belt cathode, the surface being formed of aluminum, aluminum alloy, titanium, or titanium alloy, to thereby form a porous copper foil as recited in any one of claims 1 through 3, and peeling the copper foil from the belt cathode.

10. A method for producing a porous copper foil according to any one of claims 7 through 9, wherein the surface of the cathode formed of aluminum or aluminum alloy is subjected to any one of the following surface treatment processes:
(a) the surface of the cathode is partially coated with fat or oil;
(b) the surface of the cathode is partially plated in a copper pyrophosphate bath; and
(c) the surface of the cathode is partially coated with oxide film.

11. A method for producing a porous copper foil according to any one of claims 7 through 9, wherein the surface of the cathode formed of titanium or titanium alloy is subjected to surface treatment for partial deposition of oxide film.

12. A method for producing a porous copper foil according to claim 11, wherein the surface of the cathode formed of titanium or titanium alloy is subjected to surface treatment for formation of anodization oxide film having a thickness less than 14nm through an anodization method.

13. A method for producing a complex metal foil, which comprises the step of depositing copper grains by means of electroplating on a tape substrate formed of aluminum or aluminum alloy, to thereby obtain the complex metal film as recited in claim 6.

14. A method for producing a complex metal foil according to claim 13, wherein the surface of the tape substrate is subjected to any one of the following surface treatment processes:
(a) the surface of the cathode is partially coated with fat or oil;
(b) the surface of the cathode is partially plated in a copper pyrophosphate bath; and
(c) the surface of the cathode is partially coated with oxide film.

15. Method of use of a complex metal foil, which method comprises separating an aluminum layer from a porous copper layer, the aluminum layer and the porous copper layer constituting a complex metal foil as recited in claim 6, and using a resultant aluminum foil as a collector of a positive electrode of a secondary battery.
